# EUROPÄISCHE PATENTSCHRIFT

(11) **EP 3 152 245 B1**
(45) Veröffentlichungstag und Bekanntmachung des Hinweises auf die Patenterteilung: **25.07.2018**
(21) Anmeldenummer: 15727903.5
(22) Anmeldetag: 21.05.2015
(51) Int. Cl.: C09D 175/06

(54) **SELEKTIV ABBEIZBARE BESCHICHTUNGEN FÜR METALL- UND KUNSTSTOFFUNTERGRÜNDE**
COATINGS FOR METAL AND PLASTIC SUBSTRATES WHICH CAN BE SELECTIVELY PICKLED
REVÊTEMENTS POUVANT ÊTRE DÉCAPÉS DE MANIÈRE SÉLECTIVE POUR DES SUBSTRATS MÉTALLIQUES OU EN PLASTIQUE

(30) Priorität: 06.06.2014 EP 14171524
(43) Veröffentlichungstag der Anmeldung: 12.04.2017
(73) Patentinhaber: BASF Coatings GmbH, 48165 Münster (DE)
(72) Erfinder: SEEGER, Dirk, 26125 Oldenburg (DE); PIECHA, Christoph, 26935 Stadland (DE); HOMANN, Nadine, 26131 Oldenburg (DE)
(74) Vertreter: BASF IP Association
(86) Internationale Anmeldenummer: PCT/EP2015/061246
(87) Internationale Veröffentlichungsnummer: WO 2015/185367

(56) Entgegenhaltungen:
- EP-A2- 1 072 652
- DE-A1- 2 528 943
- US-A1- 2012 163 981

## Beschreibung

### Gebiet der Erfindung

Die vorliegende Erfindung betrifft selektiv abbeizbare, mechanisch und chemisch widerstandsfähige Beschichtungen für Metall- und Kunststoffsubstrate sowie die zu deren Herstellung benötigten Beschichtungsmittel. Des Weiteren betrifft die Erfindung ein Verfahren zur Herstellung derartiger Beschichtungen und die Verwendung der Beschichtungsmittel zur Beschichtung von Metall- und Kunststoffsubstraten, insbesondere im Bereich der Flugzeuglackierung.

### Stand der Technik

In verschiedenen Einsatzbereichen besteht ein Bedarf an Beschichtungen, die hohen mechanischen Ansprüchen genügen. Beispielhaft zu nennen sind hier Oberflächen, die hinsichtlich der Umgebungsbedingungen hohen Geschwindigkeiten bei gleichzeitiger Belastung durch erodierende Stoffe, z.B. Feststoffe oder Flüssigkeiten, ausgesetzt sind. Eine erodierende Belastung erfahren grundsätzlich Objekte, die einerseits selbst bewegt werden, wie beispielsweise Rotorblätter von Windenergieanlagen oder Hubschraubern und Schiffsschrauben, Luft- und Landfahrzeuge (wie z.B. Flugzeuge, Schienenfahrzeuge, Automobile) und Schiffe.

Grundsätzlich können Erosionen hervorgerufen werden durch flüssige oder feste Stoffe, die selbst oder dispers bzw. gelöst in einem anderen gasförmigen oder flüssigen Medium (z.B. Luft oder Wasser) vorliegen und durch dieses Medium bewegt werden (z.B. Flugsand, Regen). Beim Auftreffen auf Gegenstände wird auf diese eine erodierende Kraft ausgeübt. Beispiele dafür sind die Erosion durch Regen oder Flugsand an Rotorblättern oder im Bereich der Vorflügel von Flugzeugen. Generell besteht die Möglichkeit, den Verschleißschutz wie z.B. die Erosionsbeständigkeit von Beschichtungen durch unterschiedliche Maßnahmen zu steuern. Beispielsweise lässt sich die Schichtdicke der Beschichtung erhöhen. Dies ist aus Gewichtsgründen jedoch in vielen Anwendungen, z.B. im Flugzeugbau oder Rotorblattbau von Windenergieanlagen, nicht erstrebenswert. Weiterhin können Harze mit aromatischen Harzbestandteilen wie z.B. Epoxidharze in den Beschichtungsmitteln eingesetzt werden. Aufgrund der aromatischen Molekülbestandteile bieten die resultierenden Beschichtungen eine hohe Verschleißfestigkeit, jedoch eine deutlich eingeschränkte UV-Beständigkeit. Darüber hinaus können Beschichtungsmittel eingesetzt werden, die Harze enthalten, mit denen, licht- oder temperaturinduziert, hohe Vernetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus z.B. UV-Harzen eine begrenzte Pigmentauswahl, da diese Absorptionsmaxima in Aushärtungswellenlängen aufweisen können und die Schichtdicken in Abhängigkeit der Pigmentierungshöhen limitiert sind. Weiterhin ergeben sich anlagentechnische Herausforderungen der Sauerstoffinhibierung der UV-Initiatoren. Bei der Verwendung von hitzehärtenden Lacken, wie beispielsweise Einbrennlacken auf Polyurethanbasis, besteht vor allem die Limitierung hinsichtlich der Einbrenntemperaturen im Bezug zur Anlagendimensionierung bei Großbauteilen. Es gilt daher, die Forderung nach Beschichtungen, welche hervorragende Erosionsbeständigkeit bieten und damit kostenintensive Wartungs- und Reparaturintervalle zu minimieren, zu erfüllen.

Die im Flugzeugbau zu beschichtenden Oberflächen bestehen überwiegend aus Leichtmetallen wie beispielsweise Aluminium, Magnesium und Titan und deren Legierungen, aber auch in geringerem Umfang Stahl und faserverstärkten Kunststoffen. Während eine Flugzeuglackierung im Flugbetrieb extremen Belastungen standhalten muss, so zum Beispiel die mit den hohen Geschwindigkeiten verbundenen Erosionsbelastungen, Temperaturunterschiede von mehr als 100 °C sowie hohe UV-Belastungen, muss sie darüber hinaus auch gegenüber aggressiven Chemikalien, wie zum Beispiel den verwendeten Betriebsstoffen wie Kerosin, Hydraulikflüssigkeiten und Ölen, aber auch Enteisungsflüssigkeiten und Batteriesäure resistent sein.

Es müssen somit vor allem im Bereich der Flugzeuglackierung sowohl mechanische als auch chemische Anforderungen erfüllt sein. Dennoch erfordern es die hohen Sicherheitsstandards der Luftfahrt, dass die Flugzeughüllen in regelmäßigen Abständen zwecks Wartung und Instandhaltung überprüft werden. Bei der Instandhaltung eines Flugzeugs werden dann zum einen Reparaturen von Lackschäden durchgeführt zum anderen aber auch großflächige Entlackungen bis hin zu Komplettentlackungen vorgenommen, um die Flugzeughülle auf Spuren von Korrosion oder Verschleiß zu untersuchen.

Gerade bei den Verbundwerkstoffen, wie den faserverstärkten Kunststoffen, aber zum Teil auch bei den Metalloberflächen werden zu diesem Zweck noch immer die Lackschichten mechanisch abgeschliffen, was einerseits äußerst zeitaufwändig ist und andererseits mit nicht unerheblicher Staubbelastung einhergeht. Die zwischenzeitlich aus Umweltschutzgründen eingeführte Hochdruckentlackung mit Wasser, wird aufgrund zu hoher mechanischer Belastungen nicht mehr angewendet. Das derzeit eingesetzte Mittel der Wahl ist das chemische Abbeizen zur Entlackung. Hierbei wird ein wasserbasiertes alkalisches Benzylalkohol-Ameisensäure-Gemisch im Airless-Verfahren appliziert, um die Lackschichten zum Aufquellen zu bringen. Aufgequollene Lackreste und Entlackungsmittel werden sodann mit Wasser abgespült bevor eine wässrig-alkalische Neutralisation und Reinigung erfolgt. Vor der Neubeschichtung wird die Oberfläche manuell mit Lösemitteln, insbesondere Butylacetat-Isobutanol-Gemischen gereinigt.

Typische in der Flugzeuglackierung zum Einsatz kommende Beschichtungsmittelzusammensetzungen, die den oben geschilderten Anforderungen an die Belastbarkeit genügen, basieren auf chemisch vernetzenden Systemen. Hierzu gehören insbesondere die 2-Komponenten-Beschichtungsmittel auf Basis von Epoxidharzen und Amin-Addukten beziehungsweise Amidoaminen als Härter.

Bestehende Lacksysteme weisen jedoch häufig einen hohen Gehalt an flüchtigen organischen Lösemitteln auf, der aus ökologischer Sicht auf ein Minimum zu reduzieren ist. Wünschenswert ist beispielsweise ein Lösemittelanteil im fertigen Beschichtungsmittel, der nicht höher als 420 g/l, vorzugsweise nicht höher als 350 g/l ist.

In der WO-A-2012/032113 werden Erosionsschutzbeschichtungen auf Basis einer Polyolkomponente und einer mit Isocyanatgruppen terminierten Polylacton-Komponente offenbart.

### Aufgaben

Der vorliegenden Erfindung lag die Aufgabe zugrunde, die zuvor beschriebenen Nachteile des Stands der Technik zu beseitigen. Es sollten insbesondere Beschichtungsmittelzusammensetzungen zur Verfügung gestellt werden, welche mechanisch und chemisch beständig sind, insbesondere gegen Wind- und Regen-Erosion und Betriebsstoffe wie sie im Flugzeugbetrieb eingesetzt werden, andererseits aber auch zwecks Wartung der Substrate selektiv mit auf Benzylalkohol basierenden Abbeizmitteln abbeizbar sind. Die aus den Beschichtungsmitteln hergestellten Beschichtungen sollen eine hervorragende Haftfestigkeit auf metallischen Untergründen wie Stahl oder Nickel, aber auch Leichtmetallen wie Aluminium, Magnesium und Titan besitzen, aber auch auf Kunststoffsubstraten wie insbesondere faserverstärkten Kunststoffen. Die Beschichtungsmittel sollten witterungsbeständig, insbesondere gegenüber UV-Strahlung und Feuchtigkeit sein. Ebenso sollten die Beschichtungsmittel einfach herstellbar und auch bei großen Bauteilen wie Rotorblättern von Windenergieanlagen oder Flugzeugen einfach verarbeitbar sein.

Die zurzeit eingesetzten Systeme basieren, um eine selektive Abbeizbarkeit zu erzielen auf Polyamiden, die ein- oder zweikomponentig eingesetzt werden und die bisher in überwiegend alkoholhaltigen Lacksystemen eingesetzt worden sind. Diese alkoholhaltigen Systeme sind mit anderen 2-Komponenten-Polyurethansystemen, epoxyharzbasierten Systemen oder wasserverdünnbaren Lacksystemen unverträglich. Ein neues Beschichtungsmittelsystem sollte diese Nachteile nicht aufweisen, so dass aufwändige Gerätewechsel oder Spülungen der Applikationsgeräte entfallen können.

Im Luftfahrzeugbereich besitzen polyamidhaltige selektiv abbeizbare Beschichtungssysteme den zusätzlichen Nachteil, dass diese in Betriebsmitteln wie Kerosin, Flugbenzin oder Hydraulikflüssigkeiten gemäß den gängigen Normen wie AMS 3095 nur gerade noch akzeptabel sind. Ein neues Beschichtungsmittelsystem sollte daher auch in der Ritzhärteprüfung vor und nach einer Belastung mit obengenannten Betriebsmitteln deutlich verbesserte Ergebnisse zeigen.

### Lösung der Aufgabe

Die der vorliegenden Erfindung zugrundeliegenden Aufgaben konnten überraschenderweise durch Bereitstellung einer Beschichtungsmittelzusammensetzung gelöst werden, die
(i) mindestens einen hydroxylgruppenhaltigen Polyester (A) mit einer OH-Zahl von 250 bis 660 mg KOH/g,
(ii) mindestens ein Polycarbonatdiol (B) mit einer OH-Zahl von 35 bis 500 mg KOH/g in einer Menge von 1 bis 20 Gew.-% bezogen auf Gesamtgewicht der fertigen Beschichtungsmittelzusammensetzung, und
(iii) mindestens ein Biuretgruppen enthaltendes Polyisocyanat (C) mit einem Isocyanatgruppengehalt von 5,8 bis 27 Gew.-% umfasst,
   wobei der hydroxylgruppenhaltige Polyester (A) vom Polycarbonatdiol (B) verschieden ist,
   und wobei die Beschichtungsmittelzusammensetzung
(iv) einen Anteil an organischen Lösemitteln von weniger als 420 g/l besitzt, und
(v) bezogen auf den Festkörper 40 bis 100 Gew.-% an Bindemitteln enthält.

Bindemittel stellen im Sinne der vorliegenden Erfindung den nicht-flüchtigen Anteil (= Festkörper) des Beschichtungsstoffs ohne Pigmente und Füllstoffe dar. Zu den Bindemitteln zählen daher beispielsweise auch Vernetzungsmittel und Additive wie beispielsweise Netz- und oder Dispergiermittel, Entschäumer, Verlaufadditive, Rheologieadditive oder Katalysatoren, soweit diese unter den Bedingungen zur Bestimmung des Bindemittelgehalts nicht flüchtig sind. Der Bindemittelgehalt eines Beschichtungsmittels lässt sich dadurch bestimmen, dass zunächst der Festkörpergehalt bestimmt wird (Trocknung für 60 min bei 105°C) und dann eine Veraschung der Probe (120 min bei 450°C) durchgeführt. Die Gewichtsdifferenz zwischen Trocknung bei 105 °C für 60 min und Veraschung bei 450 °C für 120 min entspricht dem Bindemittelanteil. Durch Vergleich der eingewogenen Menge an Beschichtungsmittelzusammensetzung und wie zuvor bestimmter Menge des Bindemittelanteils ergibt sich als Quotient der prozentuale Bindemittelanteil der Beschichtungsmittelzusammensetzung.

Der Festkörper der Beschichtungsmittelzusammensetzung wird bestimmt indem 1 g der Beschichtungsmittelzusammensetzung für 60 min bei 105 °C getrocknet wird. Der nach Trocknung verbleibende nichtflüchtige Anteil wird zur Einwaage ins Verhältnis gesetzt und gibt den prozentualen Festkörper der Beschichtungsmittelzusammensetzung an.

Der Bindemittelanteil am Festkörper der erfindungsgemäßen Beschichtungsmittelzusammensetzung beträgt 40 bis 100 Gew.-%, vorzugsweise 60 bis 80 Gew.-%. Beträgt der Bindemittelanteil am Festkörper 100 Gew.-%, so bedeutet dies, dass der Festkörper weder Pigmente noch Füllstoffe enthält. Das Beschichtungsmittel ist in einem solchen Fall ein Klarlack. Beträgt der Bindemittelanteil am Festkörper nur 40 Gew.-%, so bedeutet dies, dass der Festkörper 60 Gew.-% an Pigmenten und/oder Füllstoffen enthält. Das Beschichtungsmittel ist ein einem solchen Fall ein Grundierungsmittel oder ein Decklack. Der Schichtaufbau einer typischen Mehrschichtlackierung, insbesondere auch im Bereich der Flugzeuglackierung, umfasst ausgehend vom Substrat mindestens eine Grundiermittelschicht, mindestens eine Decklackschicht und eine oder mehrere fakultative Klarlackschichten. Üblicherweise nimmt der Bindemittelanteil am Festkörper von der Klarlackschicht hin zur Grundierungsschicht ab, das heißt der Anteil der Pigmente und Füllstoffe nimmt zu. Je nachdem, ob die erfindungsgemäße Beschichtungsmittelzusammensetzung als Grundiermittelzusammensetzung, als Decklack oder Klarlack eingesetzt wird enthält diese somit 0 bis 60 Gew.-% an (D) Pigmenten und/oder Füllstoffen.

Die Hydroxylzahl (OH-Zahl) der eingesetzten Polymere wird gemäß DIN EN ISO 4629 bestimmt.

Der Isocyanatgruppengehalt der eingesetzten Polyisocyanate wird gemäß DIN EN ISO 11909 bestimmt.

Alle prozentualen Angaben und Angaben von Stoffparametern bezüglich der angegebenen Komponenten (A), (B), (C) sowie der im Folgenden aufgeführten Komponenten (D), (E) und (F) beziehen sich - wie üblich - auf die jeweilige Komponente ohne organischen Lösemittelanteil, sofern nicht ausdrücklich anders angegeben. Enthält beispielsweise eine erfindungsgemäße Beschichtungsmittelzusammensetzung 10 Gew.-% einer käuflichen Formulierung eines hydroxylgruppenhaltigen Polyesters (A), die den hydroxylgruppenhaltigen Polyester als 50 gewichtsprozentige Lösung in Butylacetat enthält, so bedeutet dies, dass die erfindungsgemäße Beschichtungsmittelzusammensetzung 5 Gew.-% des hydroxylgruppenhaltigen Polyesters (d.h. 50 Gew-% von 10 Gew.-%) enthält. Das über die käufliche Formulierung eingeführte Butylacetat ist somit kein prozentualer Bestandteil der Komponente (A), sondern zählt zum Anteil der organischen Lösemittel.

Der hierin verwendete Begriff des "organischen Lösemittels" entspricht dem der Richtlinie 1999/13/EG des Rates vom 11. März 1999 (veröffentlicht im Amtsblatt der Europäischen Gemeinschaften am 29. März 1999). Demnach ist ein "organisches Lösemittel" eine "flüchtige organische Verbindung", die, ohne sich chemisch zu verändern, allein oder in Kombination mit anderen Stoffen Rohstoffe, Produkte oder Abfallstoffe auflöst oder als Reinigungsmittel zur Auflösung von Verschmutzungen, als Lösemittel, als Dispersionsmittel oder als Mittel zur Einstellung der Viskosität oder der Oberflächenspannung oder als Weichmacher oder Konservierungsmittel verwendet wird. Als "flüchtige organische Verbindung" definiert die vorgenannte Richtlinie eine "organische Verbindung", die bei 293,15 K einen Dampfdruck von 0,01 kPa oder mehr hat oder unter den jeweiligen Verwendungsbedingungen eine entsprechende Flüchtigkeit aufweist. Eine "organische Verbindung" wiederum ist eine Verbindung, die mindestens Kohlenstoff und eines der Elemente Wasserstoff, Halogene, Sauerstoff, Schwefel, Phosphor, Silizium oder Stickstoff oder mehrere davon enthält, ausgenommen Kohlenstoffoxide sowie anorganische Karbonate und Bikarbonate.

### Organische Lösemittel

Die erfindungsgemäßen Beschichtungsmittelzusammensetzungen sind vorzugsweise lösemittelbasiert, wobei der Anteil organischer Lösemittel weniger als 420 g/l, vorzugsweise weniger als 350 g/l beträgt. Üblicherweise beträgt der Gehalt an organischen Lösemitteln 100 bis 420 g/l, vorzugsweise 200 bis 350 g/l. Als organische Lösemittel sind beispielsweise die üblichen Lacklösemittel einsetzbar. Sie verhalten sich chemisch im Wesentlichen inert gegenüber den weiteren Lackbestandteilen und gehören zum flüchtigen Anteil des Beschichtungsmittels. Als organische Lösemittel besonders geeignet sind aprotische Lösemittel. Ganz besonders geeignet sind Ester, insbesondere Ester der Essigsäure wie beispielsweise, C₁₋₄-Alkylester der Essigsäure oder C₁₋₄-Alkoxyalkylester der Essigsäure. Beispiele ganz besonders geeigneter Ester als Lösemittel sind Butylacetat, 1- und 2-Methoxypropylacetat und 3-Methoxy-n-butylacetat. Weitere ganz besonders geeignete organische Lösemittel sind Ketone wie beispielsweise Methylisobutylketon oder Diketone wie Acetylaceton. Des Weiteren kann die erfindungsgemäße Beschichtungsmittelzusammensetzung auch Kohlenwasserstoffe als Lösemittel enthalten wie beispielsweise aromatische Kohlenwasserstoffe wie Shellsol A oder Alkylbenzole wie Xylol und Toluol.

### Hydroxylgruppenhaltiger Polyester (A)

Die erfindungsgemäße Beschichtungsmittelzusammensetzung enthält mindestens einen hydroxylgruppenhaltigen Polyester (A) mit einer OH-Zahl von 250 bis 660 mg KOH/g, vorzugsweise 250 bis 500 mg KOH/g und besonders bevorzugt 380 bis 460 mg KOH/g. Liegt die OH-Zahl unter 250 mg KOH/g, so sinkt in einigen Fällen die Chemikalien- und Betriebsmittelbeständigkeit. Vorzugsweise handelt es sich beim hydroxylgruppenhaltigen Polyester (A) um einen Polyester der keine aromatischen Gruppen enthält. Vorzugsweise werden die Polyester (A) aus Polyolen und Polycarbonsäuren hergestellt. Vorzugsweise ist der hydroxylgruppenhaltige Polyester (A) verzweigt. In einer ganz besonders bevorzugten Ausführungsform handelt es sich um einen von aromatischen Gruppen freien, verzweigten hydroxylgruppenhaltigen Polyester. Geeignete hydroxylgruppenhaltige Polyester werden beispielsweise unter der Produktlinie Desmophen® von der Firma Bayer MaterialScience AG (Leverkusen, Deutschland) angeboten.

Der hydroxylgruppenhaltige Polyester (A) ist in den erfindungsgemäßen Beschichtungsmittelzusammensetzungen vorzugsweise in einer Menge von 8 bis 50 Gew.-% bezogen auf das Gesamtgewicht der fertigen Beschichtungsmittelzusammensetzung enthalten. Besonders bevorzugt enthält die erfindungsgemäße Beschichtungszusammensetzung bezogen auf das Gesamtgewicht der fertigen Beschichtungsmittelzusammensetzung den hydroxylgruppenhaltigen Polyester (A) in einer Menge von 8 bis 25 Gew.-%, ganz besonders bevorzugt von 9 bis 23 Gew.-% wie beispielsweise 9 bis 14 Gew.-% oder 14 bis 23 Gew.-%. Vorzugsweise enthalten Grundierungszusammensetzungen und Haftvermittlungszusammensetzungen den hydroxylgruppenhaltigen Polyester (A) in einer Menge von 9 bis 14 Gew.-%, bezogen auf das Gesamtgewicht der fertigen Beschichtungsmittelzusammensetzung, während vorzugsweise Basislackzusammensetzungen, Decklackzusammensetzungen und Klarlackzusammensetzungen den hydroxylgruppenhaltigen Polyester (A) in einer Menge von 14 bis 23 Gew.-%, bezogen auf das Gesamtgewicht der fertigen Beschichtungsmittelzusammensetzung, enthalten.

Alle gewichtsprozentualen Bereiche gelten auch wenn beispielsweise nur ein einziger hydroxylgruppenhaltiger Polyester (A) eingesetzt wird, sie gelten dann für diesen, insbesondere wenn es sich hierbei um einen bevorzugten hydroxylgruppenhaltigen Polyester (A) handelt. Die bei einer Beschränkung auf bevorzugte hydroxylgruppenhaltige Polyester (A) nicht mehr beanspruchten hydroxylgruppenhaltigen Polyester dürfen weiterhin in der Zusammensetzung enthalten sein, aber in Summe mit den beanspruchten bevorzugten Ausführungsformen die ursprünglichen gewichtsprozentualen Bereiche nicht überschreiten. Besonders bevorzugt sind bei einer Beschränkung auf bevorzugte hydroxyfunktionelle Polyester (A) nur noch diese in der Beschichtungsmittelzusammensetzung enthalten.

### Polycarbonatdiol (B)

Als weiteren wesentlichen Bestandteil enthält die erfindungsgemäße Beschichtungsmittelzusammensetzung mindestens ein Polycarbonatdiol (B) mit einer OH-Zahl von 35 bis 500 mg KOH/g, vorzugsweise 50 bis 400 mg KOH/g, besonders bevorzugt 80 bis 300 mg KOH/g und ganz besonders bevorzugt 100 bis 250 mg KOH/g, wie beispielsweise 150 bis 200 mg KOH/g.

Vorzugsweise ist das Polycarbonatdiol (B) frei von aromatischen Gruppen. Vorzugsweise handelt es sich beim Polycarbonatdiol (B) um ein lineares Polycarbonatdiol. Das Polycarbonatdiol ist vorzugsweise an beiden Enden hydroxyterminiert. In einer ganz besonderen Ausführungsform handelt es sich beim Polycarbonatdiol (B) um ein lineares, hydroxy-terminiertes, aliphatisches Polycarbonatdiol. Dieses besitzt wiederum ganz besonders bevorzugt eine OH-Zahl von 100 bis 250 mg KOH/g wie beispielsweise 150 bis 200 mg KOH/g.

Geeignete Polycarbonatdiole (B) werden beispielsweise unter der Produktlinie Desmophen® C von der Firma Bayer MaterialScience AG (Leverkusen, Deutschland) angeboten. Unter den Polycarbonatdiolen (B) sind wiederum solche bevorzugt, die außer Kohlensäureestergruppen keine weiteren Estergruppen enthalten. Bevorzugte Polycarbonatdiole können vorzugsweise durch Umesterung von Kohlensäurediarylestern oder Kohlensäuredialkylestern mit Diolen hergestellt werden. Ganz besonders bevorzugt sind Polycarbonatdiole (B) die mit 3-Methyl-1,5-pentandiol oder 1,6-Hexandiol als Diolen hergestellt werden.

Das Polycarbonatdiol (B) ist in den erfindungsgemäßen Beschichtungsmittelzusammensetzungen in einer Menge von 1 bis 20 Gew.-% bezogen auf das Gesamtgewicht der fertigen Beschichtungsmittelzusammensetzung enthalten. Bevorzugt enthält die erfindungsgemäße Beschichtungszusammensetzung bezogen auf das Gesamtgewicht der fertigen Beschichtungsmittelzusammensetzung das Polycarbonatdiol (B) in einer Menge von 2 bis 14 Gew.-%, ganz besonders bevorzugt in einer Menge von 6 bis12 Gew.-%.

Alle gewichtsprozentualen Bereiche gelten auch wenn beispielsweise nur ein Polycarbonatdiol (B) eingesetzt wird, sie gelten dann für dieses, insbesondere wenn es sich hierbei um ein bevorzugtes Polycarbonatdiol (B) handelt. Die bei einer Beschränkung auf bevorzugte Polycarbonatdiole (B) nicht mehr beanspruchten Polycarbonatdiole dürfen weiterhin in der Zusammensetzung enthalten sein, aber in Summe mit den beanspruchten bevorzugten Ausführungsformen die ursprünglichen gewichtsprozentualen Bereiche nicht überschreiten. Besonders bevorzugt sind bei einer Beschränkung auf bevorzugte Polycarbonatdiole (B) nur noch diese in der Beschichtungsmittelzusammensetzung enthalten.

Wird der Anteil des Polyesters (A) in Relation zum Polycarbonatdiol (B) verringert, so sinkt die Chemikalienbeständigkeit.

Liegt der Polycarbonatdiolgehalt unter 6 Gew.-% bezogen auf das Gesamtgewicht der fertigen Beschichtungsmittelzusammensetzung, so sinkt die Elastizität, und bei gleicher Applikationsviskosität liegt der Gehalt organischer Lösemittel üblicherweise höher. Ferner sinkt die Selektivität der Abbeizbarkeit. Übersteigt der Polycarbonatdiolgehalt 12 Gew.-% bezogen auf das Gesamtgewicht der fertigen Beschichtungsmittelzusammensetzung, so sinkt die Beständigkeit gegen Betriebsmittel. Unter Betriebsmitteln werden insbesondere Kerosin (Aliphaten und Aromaten), Flugbenzin, Skydrol oder andere Hydraulikflüssigkeiten, Enteisungsmittel (Alkalisalze niederer Carbonsäuren als Lösung), Toilettenflüssigkeiten und Reinigungsmittel wie beispielsweise Seifen, verstanden.

### Biuretgruppen enthaltendes Polyisocyanat (C)

Des Weiteren enthält die erfindungsgemäße Beschichtungsmittelzusammensetzung mindestens ein Biuretgruppen enthaltendes Polyisocyanat (C) mit einem Isocyanatgruppengehalt von 5,8 bis 27 Gew.-%, vorzugsweise 15 bis 26 Gew.-% und besonders bevorzugt 20 bis 26 Gew.-%. Es kann sich hierbei um ein aromatisches oder aliphatisches Polyisocyanat handeln. Vorzugsweise handelt es sich bei dem Biuretgruppen enthaltenden Polyisocyanat um ein aliphatisches Polyisocyanat. Die aliphatischen Biuretgruppen enthaltenden Polyisocyanate werden beispielsweise aus 1,6-Hexamethylendiisocyanat, (HDI), 1,3-Cyclohexyldiisocyanat, 1,4-Cyclohexyldiisocyanat (CHDI), Diphenylmethandiisocyanate, 2,2,4- und/oder 2,4,4-Trimethyl-1,6-hexamethylendiisocyanat, Dodecamethylendiisocyanat, Isophorondiisocyanat (IPDI) durch Oligomerisierung unter Biuretbildung erhalten. Beispielsweise reagieren drei Moleküle HDI mit einem Molekül Wasser unter Abspaltung eines Moleküls Kohlendioxid zu einem HDI-Biuret.

Besonders bevorzugt eingesetzt werden Biurete aliphatischer Polyisocyanate auf der Basis von Isophorondiisocyanat und/oder Hexamethylendiisocyanat und ganz besonders bevorzugt handelt es sich um ein Biuret des Hexamethylendiisocyanats.

Das Biuretgruppen enthaltende Polyisocyanat (C) ist in den erfindungsgemäßen Beschichtungsmittelzusammensetzungen vorzugsweise in einer Menge von 20 bis 45 Gew.-% bezogen auf das Gesamtgewicht der fertigen Beschichtungsmittelzusammensetzung enthalten. Besonders bevorzugt enthält die erfindungsgemäße Beschichtungszusammensetzung bezogen auf das Gesamtgewicht der fertigen Beschichtungsmittelzusammensetzung das Biuretgruppen enthaltende Polyisocyanat (C) in einer Menge von 20 bis 40 Gew.-%, ganz besonders bevorzugt in einer Menge von 20 bis 30 Gew.-% oder 30 bis 40 Gew.-%.

Alle gewichtsprozentualen Bereiche gelten auch, wenn beispielsweise nur ein Biuretgruppen enthaltendes Polyisocyanat (C) eingesetzt wird, sie gelten dann für dieses, insbesondere wenn es sich hierbei um ein bevorzugtes Biuretgruppen enthaltendes Polyisocyanat (C) handelt. Die bei einer Beschränkung auf bevorzugte Biuretgruppen enthaltende Polyisocyanat (C) nicht mehr beanspruchte Biuretgruppen enthaltende Polyisocyanate dürfen weiterhin in der Zusammensetzung enthalten sein, aber in Summe mit den beanspruchten bevorzugten Ausführungsformen die ursprünglichen gewichtsprozentualen Bereiche nicht überschreiten. Besonders bevorzugt sind bei einer Beschränkung auf bevorzugte Biuretgruppen enthaltende Polyisocyanate (C) nur noch diese in der Beschichtungsmittelzusammensetzung enthalten.

Für die Erfindung ist es essenziell Biuretgruppen enthaltende Polyisocyanate (C) einzusetzen. Polyisocyanate auf der Basis von beispielsweise Isocyanuraten haben sich insbesondere hinsichtlich der Selektivität der Abbeizbarkeit als ungenügend erwiesen. Insbesondere die Kombination der Biuretgruppen enthaltenden Polyisocyanate (C) mit die Polycarbonatdiolen (B) ist es jedoch, welche die überraschend hohe Selektivität gewährleistet.

### Pigmente und Füllstoffe (D)

Pigmente sind gemäß DIN EN ISO 4618 Farbmittel, die aus feinen Teilchen bestehen, die in der flüssigen Phase des Beschichtungsstoffes unlöslich sind und aufgrund ihrer optischen, schützenden und/oder dekorativen Eigenschaften verwendet werden. Der Begriff Farbmittel schließt hierbei schwarze oder weiße Farbmittel ein. Bevorzugte Pigmente sind farbgebende Pigmente und/oder effektgebende Pigmente und Korrosionschutzpigmente. Unter effektgebenden Pigmenten sind solche zu verstehen, die einen optischen Effekt geben, der insbesondere auf Lichtreflexion beruht. Typische effektgebende Pigmente im Sinne dieser Anmeldung sind Perglanzpigmente oder metallische Pigmente. Es können jedoch auch magnetisch abschirmdende, elektrisch abschirmende, fluoreszierende, phosphoreszierende und insbesondere korrosionshemmende Pigmente eingesetzt werden.

Füllstoffe hingegen sind nach DIN EN ISO 4618 Materialien in körniger oder Pulverform, die in der flüssigen Phase eines Beschichtungsstoffs unlöslich sind und verwendet werden, um bestimmte physikalische Eigenschaften zu erreichen oder zu beeinflussen. Da es zwischen Pigmenten und Füllstoffen hinsichtlich ihres Verwendungszwecks zu Überschneidungen kommen kann, wird häufig der Brechnungsindex herangezogen. Dieser liegt bei Füllstoffen unterhalb von 1,7, weshalb diese Produktklasse kein nennenswertes Streu- und Deckvermögen erreicht. Eine Unterscheidung ist im Rahmen der vorliegenden Erfindung jedoch nicht zwingend notwendig.

Die chemische Art der Pigmente und/oder Füllstoffe (D) ist hierbei unkritisch, es kann sich hierbei um organische oder anorganische Pigmente und/oder organische oder anorganische Füllstoffe handeln. Insbesondere für den Einsatz der erfindungsgemäßen Beschichtungsmittelzusammensetzung als Grundiermittel werden jedoch anorganische Pigmente und/oder anorganische Füllstoffe bevorzugt. Zu Erhöhung des Korrosionsschutzes können beispielsweise sogenannte Korrosionsschutzpigmente eingesetzt werden wie zum Beispiel Zinkphosphat, Zinkchromat oder Strontiumchromat, wobei Zinkphosphat aus ökologischen Gründen bevorzugt ist. Besonders vorteilhaft sind die Beschichtungsmittelzusammensetzungen daher frei von Chrom(VI)-Verbindungen.

Weitere typische in den erfindungsgemäßen Beschichtungsmitteln einsetzbare Pigmente sind Weißpigmente wie beispielweise Titandioxid oder Schwarzpigmente wie beispielsweise Pigmentruße. Als Füllstoffe können beispielsweise Calciumcarbonate, Bariumsulfate und vorzugsweise Silikate wie beispielsweise Talke eingesetzt werden oder Kieselsäuren wie beispielsweise Fällungskieselsäuren oder Pyrolysekieselsäuren. Die eingesetzten Füllstoffe sind vorzugsweise hydrophob. Verdickend wirkende Kieselsäuren zählen hierin ebenfalls zu den Füllstoffen.

### Komponente (E) - Epoxidharze sowie deren Mischungen mit hydroxyfunktionellen Acrylharzen

Vorzugsweise enthält die erfindungsgemäße Beschichtungsmittelzusammensetzung als weitere Komponente (E) mindestens ein gegenüber Isocyanatgruppen reaktives Epoxidharz oder die Mischung mindestens eines hydroxyfunktionellen Acrylharzes mit mindestens einem Epoxidharz. Hierin schließt der Begriff "Acrylharz" wie im Fachgebiet üblich auch solche Harze mit ein, die Methacrylate oder weitere ethylenisch ungesättigte Monomere einpolymerisiert enthalten können. Ganz besonders bevorzugt werden im Rahmen der vorliegenden Erfindung Epoxidharze (E) eingesetzt, die vorzugsweise hydroxyfunktionell sind. In einer besonders bevorzugten Ausführungsform wird eine Mischung eines hydroxyfunktionellen Epoxidharzes mit einem hydroxyfunktionellen Acrylharz als Komponente (E) eingesetzt.

Der Anteil der Komponente (E) in den erfindungsgemäßen Beschichtungsmittelzusammensetzungen beträgt vorzugsweise 0 bis 6 Gew.-%, besonders bevorzugt 1,0 bis 5,0 Gew.-% und ganz besonders bevorzugt 1,5 bis 4,5 Gew.-%, jeweils auf das Gesamtgewicht der fertigen Beschichtungsmittelzusammensetzung bezogen. Der Einsatz von Mengen oberhalb 6 Gew.-%, bezogen auf das Gesamtgewicht der fertigen Beschichtungsmittelzusammensetzung, verringert die Flexibilität der Beschichtung sowie die Selektivität der Abbeizbarkeit.

Alle gewichtsprozentualen Bereiche gelten auch, wenn beispielsweise nur eine Spezies als Komponente (E) eingesetzt wird, sie gelten dann für diese Spezies, dies gilt insbesondere wenn es sich hierbei um eine bevorzugte Spezies der Komponente (E) handelt. Die bei einer Beschränkung auf bevorzugte Spezies (E) nicht mehr beanspruchten Harze der Komponente (E) dürfen weiterhin in der Zusammensetzung enthalten sein, aber in Summe mit den beanspruchten bevorzugten Ausführungsformen die ursprünglichen gewichtsprozentualen Bereiche nicht überschreiten. Besonders bevorzugt sind bei einer Beschränkung auf bevorzugte Spezies der Komponente (E) nur noch diese in der Beschichtungsmittelzusammensetzung enthalten.

Reaktivität gegenüber Isocyanatgruppen wird insbesondere durch Hydroxylgruppen in der Komponente (E) realisiert.

Der OH-Gehalt der hydroxyfunktionellen Acrylharze, die in Mischung mit den Epoxidharzen eingesetzt werden können, beträgt vorzugsweise mindestens 1 Gew.-%, besonders bevorzugt mindestens 3 Gew.-% und vorzugsweise höchstens 8 Gew.-%, besser höchstens 6 Gew.-% bezogen auf den Festkörper des Acrylharzes. Es handelt sich vorzugsweise um Copolymerisate von nicht-hydroxyfunktionellen Monomeren mit hydroxyfunktionellen Acrylsäureestern sowie gegebenenfalls nichtacrylischen ethylenisch ungesättigten Monomeren.

Bei den Epoxidharzen handelt es sich vorzugsweise um Epoxidharze, welche endständig jeweils eine Epoxidgruppe enthalten und im polymeren Rückgrat freie Hydroxylgruppen, die zur Reaktion mit Isocyanatgruppen dienen. Der OH-Gehalt der Epoxidharze beträgt vorzugsweise 1 bis 6 Gew.-%, besonders bevorzugt 1 bis 3 Gew.-% bezogen auf den Festkörper des Epoxidharzes.

Besonders bevorzugt, aber nicht darauf limitiert ist der Einsatz der Komponente (E) in Beschichtungsmittelzusammensetzungen, die der Beschichtung von Metallsubstraten, insbesondere Edelstahlsubstraten dienen. Komponente (E) wirkt sich hierin besonders vorteilhaft bezüglich der Haftung der gehärteten Lackschicht auf dem Substrat aus.

### Weitere Komponenten (F)

Schließlich können die erfindungsgemäßen Beschichtungsmittelzusammensetzungen auch noch weitere von den Komponenten (A), (B), (C), (D) und (E) und den organischen Lösemitteln verschiedene Bestandteile (F) als Bindemittel enthalten. Die Bestandteile (F) umfassen hierbei weitere Bindemittel, darunter auch Bindemittel mit speziellen Funktionen, so beispielsweise typische Lackadditive wie Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe oder Katalysatoren, beispielsweise solche auf der Basis von Zinn-, Molybdän-, Zirkonium- oder Zinkverbindungen oder Aminkatalysatoren. Besonders geeignete Katalysatoren sind Zinnverbindungen wie Dimethylzinndilaurat oder Dibutylzinndilaurat, die, wie alle vorgenannten Katalysatoren eine Reaktion zwischen den Biuretgruppen enthaltenden Polyisocyanaten (C) und den hydroxylgruppenhaltigen Komponenten (A) und (B) katalysieren.

Die Bestandteile (F) werden in Summe vorzugsweise in den für sie üblichen Mengen von 0 bis 10 Gew.-%, besonders bevorzugt 0 bis 5 Gew.-% und ganz besonders bevorzugt 0,1 bis 4 Gew.-% bezogen auf das Gesamtgewicht der fertigen Beschichtungsmittelzusammensetzung eingesetzt.

Das Molverhältnis der Summe aller Hydroxylgruppen in den hydroxygruppenhaltigen Polyestern (A), den Polycarbonatdiolen (B) und den Harzen (E) gegenüber der Summe der Isocyanatgruppen des Biuretgruppen enthaltenden Polyisocyanats (C) beträgt vorzugsweise 1:1 bis 1:1,5, besonders bevorzugt 1:1,1 bis 1:1,4 und ganz besonders bevorzugt 1 : 1,15 bis 1 : 1,3.

In einer besonders bevorzugten Ausführungsform der Erfindung umfasst die erfindungsgemäße Beschichtungsmittelzusammensetzung
(i) mindestens einen hydroxylgruppenhaltigen, verzweigten, aliphatischen Polyester (A) mit einer OH-Zahl von 250 bis 440 mg KOH/g,
(ii) mindestens ein lineares, aliphatisches Polycarbonatdiol (B) mit einer OH-Zahl von 100 bis 250 mg KOH/g in einer Menge von 2 bis 15 Gew.-% bezogen auf das Gesamtgewicht der fertigen Beschichtungsmittelzusammensetzung,
(iii) mindestens ein Biuretgruppen enthaltendes aliphatisches Polyisocyanat (C) mit einem Isocyanatgruppengehalt von 15 bis 25 Gew.-%,
(iv) mindestens ein Pigment und/oder einen Füllstoff (D) in einer Menge von 0 bis 30 Gew.-% bezogen auf das Gesamtgewicht der fertigen Beschichtungsmittelzusammensetzung,
(v) mindestens eine Komponente (E) in einer Gesamtmenge von 0 bis 6 Gew.-%, vorzugsweise 1 bis 5 Gew.-% bezogen auf das Gesamtgewicht der fertigen Beschichtungsmittelzusammensetzung, wobei die Komponente (E) ein Epoxidharz oder einer Mischung aus einem Epoxidharz und einem hydroxyfunktionellen Acrylatharz umfasst oder aus einem Epoxidharz und einem hydroxyfunktionellen Acrylatharz besteht,
(vi) mindestens eine weitere von (A), (B), (C), (D) und (E) und organischen Lösemitteln verschiedene Komponente (F) in einer Menge von 0 bis 10 Gew.-%,
   wobei der hydroxylgruppenhaltige Polyester (A) vom Polycarbonatdiol (B) verschieden ist,
   das Verhältnis der Hydroxylgruppen aus (A), (B) und (E) zu den Isocyanatgruppen aus (C) 1:1,15 bis 1:1,30 beträgt,
   und wobei die Beschichtungsmittelzusammensetzung
(vii) einen Anteil an organischen Lösemitteln von weniger als 420 g/l besitzt, und
(viii) auf das Gesamtgewicht der fertigen Beschichtungsmittelzusammensetzung 40 bis 75 Gew.-% an Bindemitteln enthält.

### Weitere Gegenstände der Erfindung

Das Beschichtungsmittel wird bevorzugt zur Herstellung einer selektiv abbeizbaren Lackschicht in Mehrschichtbeschichtungen eingesetzt.

Die erfindungsgemäße Zusammensetzung kann als Original Equipment Manufacturer (OEM)-Lack oder als Reparaturlack eingesetzt werden.

Ein weiterer Gegenstand der Erfindung ist ein Verfahren zur Herstellung einer Mehrschichtbeschichtung, die erhältlich ist durch Aufbringen mindestens einer Grundiermittelzusammensetzung auf ein metallisches Substrat und/oder Kunststoffsubstrat, Aufbringen mindestens einer Decklackzusammensetzung oder Basislackzusammensetzung darauf und gegebenenfalls durch Aufbringen mindestens einer Klarlackzusammensetzung darauf, wobei mindestens eine der Grundiermittelzusammmensetzungen, Decklackzusammensetzungen oder Klarlackzusammensetzungen eine erfindungsgemäße Beschichtungsmittelzusammensetzung ist und die Beschichtungsmittelzusammensetzung anschließend chemisch vernetzt wird.

Vorzugsweise wird die erfindungsgemäße Beschichtungsmittelzusammensetzung zur Herstellung einer Grundierungsschicht verwendet. Die erfindungsgemäße Zusammensetzung kann in der erfindungsgemäßen Mehrschichtlackierung selbst auch zur Herstellung einer Zwischenschicht oder Decklackschicht eingesetzt werden. Die erfindungsgemäße Beschichtungsmittelzusammensetzung kann auch als Klarlack eingesetzt werden, um die äußerste Lackschicht zu bilden.

Weiterer Gegenstand der Erfindung ist daher die Verwendung einer erfindungsgemäßen Beschichtungsmittelzusammensetzung als Grundiermittelzusammensetzung, Decklackzusammensetzung oder Klarlackzusammensetzung zur Beschichtung von metallischen Substraten und/oder Kunststoffsubstraten, wobei es sich bei den Substraten vorzugsweise um eine Flugzeughülle oder ein Teil einer Flugzeughülle, um eine Windenergieanlage und/oder Rotorblätter, um eine Schiffshülle oder ein Teil derselben oder (große) Maschinen handelt.

Die erfindungsgemäßen Zusammensetzungen können mit den üblichen Verfahren wie Spritzen (z.B. Airless, Airmix, Druckluft, Heiß-Spritzverfahren oder Induktionsvermischung), Walzen, Rollen, Streichen oder über eine Kartusche appliziert werden. Vorzugsweise werden die erfindungsgemäßen Beschichtungszusammensetzungen gespritzt, gerollt oder über eine Kartusche appliziert.

Die erfindungsgemäßen Zusammensetzungen werden vorzugsweise so aufgetragen, dass eine Trockenfilmschichtdicke von 5 µm bis 250 µm resultiert. Bevorzugt beträgt die Trockenfilmschichtdicke 5 µm bis 120 µm, besonders bevorzugt 5 µm bis 25 µm.

Je nach Anwendungsbereich sind für Grundierungen Trockenfilmschichtdicken von 10 bis 100 µm, für Zwischenschichten 5 bis 40 µm, Decklacke 20 bis 250 µm und Klarlacke 5 bis 60 µm bevorzugt.

Vorzugsweise erfolgt die Härtung der erfindungsgemäßen Beschichtungsmittelzusammensetzung durch chemische Vernetzung, bevorzugt bei einer Temperatur von bis zu 60 °C. Besonders bevorzugt ist ein Temperaturbereich von 15 bis 60 °C, ganz besonders von 18 bis 50 °C. Die thermische Aushärtung erfolgt vorzugsweise während einer Zeit von 30 bis 90 min bei 40 °C bis 60 °C oder 4 bis 6 h bei 15 °C bis 25 °C. Eine vollständige Durchhärtung ist üblicherweise bei 20 °C nach etwa 1 Woche gegeben. Der Fachmann spricht dann von der "Ausbildung der Endeigenschaften".

Für die Trocknung bzw. Konditionierung der nassen Schichten wird die Trocknung bei Raumtemperatur (25 °C) bevorzugt oder eine thermische Trocknung bei gegenüber Raumtemperatur erhöhter Temperatur und/oder eine Trocknung mittels Konvektionsverfahren verwendet, wobei übliche und bekannte Vorrichtungen wie Durchlauföfen, NIR- und IR- Heizstrahler, Gebläse und Blastunnel eingesetzt werden können. Diese Vorrichtungen und somit auch die Trocknungsverfahren sind miteinander kombinierbar. Die erfindungsgemäßen Mehrschichtlackierungen können auf beliebige Substrate aufgebracht werden.

Die Substrate können aus den unterschiedlichsten Materialien und Kombinationen von Materialien aufgebaut sein. Vorzugsweise bestehen sie aus Metallen wie Stahl, Nickel, Aluminium, Magnesium oder Titan oder Legierungen dieser Metalle oder aus Kunststoffen, die faserverstärkt sein können, wie glasfaserverstärkte Kunststoffe (GFK), aramidfaserverstärkte Kunststoffe (AFK), kohlefaserverstärkte Kunststoffe (CFK) oder beispielsweise mit Hanf oder Sisal naturfaserverstärkte Kunststoffe. Besonders bevorzugt ist das Substrat aus Metall und/oder Kunststoff. Der Begriff Metall schließt im Sinne der Erfindung auch Legierungen aus verschiedenen Metallen ein.

Als Substrate kommen beispielsweise Rotorblätter, Luft- oder Landfahrzeuge, Schiffe, Bauwerke oder Pipelines oder große Maschinen oder Teile der vorgenannten Gegenstände in Frage kommen. Bevorzugte Substrate sind Rotorblätter, insbesondere von Windenergieanlagen, Hubschraubern oder Schiffsschrauben sowie Luftfahrzeuge wie beispielsweise Flugzeuge. Besonders geeignete Substrate sind Rotorblätter, von Windenergieanlagen und Flugzeugteile wie Flugzeughüllen und Teile davon.

Ein weiterer Gegenstand der Erfindung sind die oben genannten Substrate, die mit der erfindungsgemäßen Zusammensetzung bzw. der erfindungsgemäßen Mehrschichtlackierung beschichtet sind.

Im Folgenden soll die Erfindung anhand von Beispielen veranschaulicht werden.

### BEISPIELE

Folgende Lackbestandteile wurden verwendet:

### Verwendete Materialien

| Komponente | Abkürzung und chemische Bezeichnung |
|---|---|
| (A) | A1: aliphatischer, verzweigter OH-funktioneller Polyester mit einer OH-Zahl von 425 mg KOH/g (76%ig in Butylacetat) |
| | A2: OH-funktioneller Polyester mit einer OH-Zahl von 266 mg KOH/g (77%ig in Butylacetat) |
| (B) | B1: lineares, aliphatisches Polycarbonatdiol mit einer OH-Zahl von 171 mg KOH/g |
| (C) | C1: biuretgruppenhaltiges Polyisocyanat mit einem NCO-Gehalt von 23 Gew.-% im Festkörper (70 gew.-%ige Lösung in Xylol) |
| | C2: biuretgruppenhaltiges Polyisocyanat mit einem NCO-Gehalt von 23 Gew.-% im Festkörper (70 gew.-%ige Lösung in Methoxypropylacetat) |
| | C3: biuretgruppenhaltiges Polyisocyanat mit einem NCO-Gehalt von 23 Gew.-% im Festkörper (90 gew.-%ige Lösung in Methylisobutylketon) |
| | C4: biuretgruppenhaltiges Polyisocyanat mit einem NCO-Gehalt von 23 Gew.-% im Festkörper (76 gew.-%ige Lösung in Butylacetat) |
| | C1-V: isocyanuratgruppenhaltiges Polyisocyanat mit einem NCO-Gehalt von 23 Gew.-% im Festkörper (70 gew.-%ige Lösung in Xylol) |
| | C2-V: isocyanuratgruppenhaltiges Polyisocyanat mit einem NCO-Gehalt von 23 Gew.-% im Festkörper (70 gew.-%ige Lösung in Methoxypropylacetat) |
| | CX-V: isocyanuratgruppenhaltiges Polyisocyanat mit einem NCO-Gehalt von 23 Gew.-% im Festkörper (76 gew.-%ige Lösung in Cyclohexanon/Methoxypropylacetat, 1/1) |
| (D) | D1: dimethyldichlorsilanmodifizierte hydrophobe Kieselsäure (Füllstoff) |
| | D2: Weißpigment auf Rutilbasis |
| | D3: Korrosionsschutzpigment aus Zinkorthophosphathydrat |
| | D4: hochfeiner Talk (Füllstoff) |
| | D5: Pigmentruß (Schwarzpigment) |
| | D6: Talkum |
| | D7: rotes Eisenoxidpigment |
| (E) | E1: isocyanatvenetzendes epoxyfunktionelles Acrylharz (72 gew.-%ig in Xylol/Shellsol A/Butoxyl, 2/2/1) |
| | E2: Epoxyharz auf Basis von Bisphenol A und Epichlorhydrin (75 gew.-%ig in Xylol) |
| | E1-V: styrenfreies Haftharz auf Polyesterbasis (60 gew.-%ig in Butylacetat) |
| (F) | F1: Blockcopolymer mit Amingruppen (30 gew.-%ig in Methoxypropylacetat/Butylacetat, 6/1) (Netz- und Dispergiermittel) |
| | F2: polyethermodifiziertes Polymethylalkylsiloxan (52 gew.-%ig in Alkylbenzol/Butyrolacton, 1/1), Oberflächenadditiv |
| | F3: Entschäumer auf Polysiloxanbasis (52 gew.-%ig in Alkylbenzol) |
| | F4: Polyacrylatlösung (51 gew.-%ig), Verlaufmittel und Entlüfter |
| | F5: modifizierter Harnstoff (52 gew.-%ig in Dimethylsulfoxid), Rheologieadditiv |
| | F6: polyacrylatbasiertes Verlaufmittel (75 gew.-%ig in dibasischem Ester) |
| | F7: silikonfreier Entschäumer |
| | F8: 3-Glycidoxypropyltrimethoxysilan |
| | F9: Dimethylzinndineodecanoat (Katalysator) |
| | F10: Bismut(III)neodecanoat |
| | F11: Mischung aus Bis(1,2,2,6,6-pentamethyl-4-piperidyl)sebacat und Methyl-1,2,2,6,6-pentamethyl-4-piperidylsebacat (Lichtschutzadditiv) |
| | F12: UV-Absorber auf Basis eines Hydroxyphenyltriazins (85 gew.-%ig) |

Im Übrigen wurden neben den in einigen Handelsprodukten bereits enthaltenen Lösemitteln noch folgende organische Lösemittel eingesetzt: L1: Acetylaceton, L2: Butylacetat, L3: Cyclohexanon, L4: Methoxypropylacetat und L5: Methyl isobutylketon.

OH-Zahlen und NCO-Gehalte und dergleichen beziehen sich in obiger Tabelle immer auf den Wirkstoff bzw. Feststoff ohne Lösemittel.

Aus den oben angeführten Materialen wurden verschiedene erfindungsgemäße und nicht-erfindungsgemäße Beschichtungsmittelzusammensetzungen gemäß den folgenden Tabellen 1 bis 4 hergestellt. Nicht-erfindungsgemäße Materialien und nicht-erfindungsgemäße Beschichtungsmittelzusammensetzungen sind mit dem Zusatz "-V" gekennzeichnet der für "Vergleich" steht.

Die Zahlenangaben in den Tabellen der Rezepturen der Beschichtungsmittelzusammensetzungen entsprechen den eingesetzten Gewichtsteilen der Materialen. "A1 = 10" bedeutet somit beispielsweise, dass 10 Gewichtsteile einer 76 gew.-%igen Lösung des aliphatischen, verzweigten OHfunktionellen Polyesters mit einer OH-Zahl von 425 mg KOH/g in Butylacetat eingesetzt wurden. Alle Gewichtsteile der folgenden Rezepturen addieren sich jeweils zu 100 Gewichtsteilen. Bei "A1 = 10" (76 gew.-%ig in Butylacetat) bedeutet dies, dass 7,6 Gew.-% eines hydroxyfunktionellen Polyesters (A) mit einer OH-Zahl von 425 mg KOH/g in der Beschichtungsmittelzusammensetzung enthalten sind.

**Tabelle 1 - Klarlacke**

| Komponenten | KL1 | KL1-V | KL2 | KL2-V | KL3 | KL4 |
|---|---|---|---|---|---|---|
| A1 | 24,65 | 24,65 | - | - | - | - |
| A2 | - | - | 29,44 | 29,44 | 26,67 | 26,67 |
| B1 | 9,30 | 9,30 | 11,11 | 11,11 | 13,89 | 13,89 |
| C1 | 53,50 | - | 44,44 | - | 44,44 | - |
| C1-V | - | 53,50 | - | 44,44 | - | - |
| C2 | - | - | - | - | - | 44,44 |
| F1 | 0,47 | 0,47 | 0,56 | 0,56 | 0,56 | 0,56 |
| F2 | 0,05 | 0,05 | 0,06 | 0,06 | 0,06 | 0,06 |
| F9 | 0,28 | 0,28 | 0,33 | 0,33 | 0,33 | 0,33 |
| F10 | 0,19 | 0,19 | 0,22 | 0,22 | 0,22 | 0,22 |
| F11 | 0,70 | 0,70 | 0,83 | 0,83 | 0,83 | 0,83 |
| F12 | 0,70 | 0,70 | 0,83 | 0,83 | 0,83 | 0,83 |
| L1 | 0,47 | 0,47 | 0,56 | 0,56 | 0,56 | 0,56 |
| L2 | 9,69 | 9,69 | 11,62 | 11,62 | 11,61 | 11,61 |
| Summe | 100,00 | 100,00 | 100,00 | 100,00 | 100,00 | 100,00 |

Die erfindungsgemäßen Klarlacke KL1 und KL2 unterscheiden sich von den nicht-erfindungsgemäßen Klarlacken KL1-V und KL2-V dadurch, dass in den nicht-erfindungsgemäßen Beispielen ein isocyanuratgruppenhaltiges Polyisocyanat anstelle eines biuretgruppenhaltigen Polyisocyanats eingesetzt wurden. Die erfindungsgemäßen Klarlacke KL1 und KL2 unterscheiden sich voneinander in der Wahl unterschiedlicher erfindungsgemäß einsetzbarer Komponenten (A), während sich die erfindungsgemäßen Klarlacke KL3 und KL4 durch die Wahl unterschiedlicher erfindundungsgemäß einsetzbarer biuretgruppenhaltiger Polyisocyanate (C) unterscheiden.

**Tabelle 2 - Basislacke**

| Komponenten | BL1 | BL1-V | BL2 | BL2-V | BL3 | BL3-V | BL4 | BL4-V |
|---|---|---|---|---|---|---|---|---|
| A1 | 17,96 | 17,96 | - | - | - | - | - | |
| A2 | - | - | 20,41 | 20,41 | 20,41 | 20,41 | 22,45 | 22,45 |
| B1 | 7,78 | 7,78 | 8,84 | 8,84 | 8,84 | 8,84 | 6,80 | 6,80 |
| C1 | 40,11 | - | 31,97 | - | - | - | - | - |
| C1-V | - | 40,11 | - | 31,97 | - | - | - | - |
| C2 | - | - | - | - | 31,97 | - | 31,97 | - |
| C2-V | - | - | - | - | - | 31,97 | - | 31,97 |
| D1 | 0,30 | 0,30 | 0,34 | 0,34 | 0,34 | 0,34 | 0,34 | 0,34 |
| D2 | 21,86 | 21,86 | 24,83 | 24,83 | 24,83 | 24,83 | 24,83 | 24,83 |
| F1 | 1,20 | 1,20 | 1,36 | 1,36 | 1,36 | 1,36 | 1,36 | 1,36 |
| F2 | 0,06 | 0,06 | 0,07 | 0,07 | 0,07 | 0,07 | 0,07 | 0,07 |
| F9 | 0,24 | 0,24 | 0,27 | 0,27 | 0,27 | 0,27 | 0,27 | 0,27 |
| F10 | 0,18 | 0,18 | 0,20 | 0,20 | 0,20 | 0,20 | 0,20 | 0,20 |
| F11 | 0,90 | 0,90 | 1,02 | 1,02 | 1,02 | 1,02 | 1,02 | 1,02 |
| F12 | 0,90 | 0,90 | 1,02 | 1,02 | 1,02 | 1,02 | 1,02 | 1,02 |
| L1 | 0,60 | 0,60 | 0,68 | 0,68 | 0,68 | 0,68 | 0,68 | 0,68 |
| L2 | 2,99 | 2,99 | 3,40 | 3,40 | 3,40 | 3,40 | 3,40 | 3,40 |
| L4 | 3,12 | 3,12 | 3,55 | 3,55 | 3,55 | 3,55 | 3,55 | 3,55 |
| L5 | 1,80 | 1,80 | 2,04 | 2,04 | 2,04 | 2,04 | 2,04 | 2,04 |
| Summe | 100,00 | 100,00 | 100,00 | 100,00 | 100,00 | 100,00 | 100,00 | 100,00 |

Die erfindungsgemäßen Basislacke BL1, BL2, BL3 und BL4 unterscheiden sich von den nicht-erfindungsgemäßen Basislacken BL1-V, BL2-V, BL3-V und BL4-V dadurch, dass in den nicht-erfindungsgemäßen Beispielen isocyanuratgruppenhaltige Polyisocyanate anstelle biuretgruppenhaltiger Polyisocyanate eingesetzt wurden. Der erfindungsgemäße Basislacke BL1 unterscheidet sich vom erfindungsgemäßen Basislack BL2 in der Wahl einer unterschiedlichen erfindungsgemäß einsetzbaren Komponenten (A), während sich der erfindungsgemäße Basislacke BL2 von den erfindungsgemäßen Basislacken BL3 und BL4 durch die Wahl eines unterschiedlichen erfindungsgemäß einsetzbaren biuretgruppenhaltigen Polyisocyanats (C) unterscheidet.

**Tabelle 3 - Einsatz als Haftvermittlungslackierung für die Reparaturlackierung**

| Komponenten | HL1 | HL2 | HL3 | HL4 |
|---|---|---|---|---|
| A1 | 12,84 | 12,84 | 12,75 | 12,75 |
| B1 | 8,57 | 8,57 | 8,50 | 8,50 |
| C3 | 28,33 | 28,33 | 28,33 | 28,33 |
| D1 | 0,27 | 0,27 | 0,27 | 0,27 |
| D2 | 13,93 | 13,93 | 13,82 | 13,82 |
| D3 | 5,09 | 5,09 | 5,05 | 5,05 |
| D4 | 3,21 | 3,21 | 3,19 | 3,19 |
| D5 | 0,11 | 0,11 | 0,11 | 0,11 |
| E1 | - | 5,95 | - | 5,95 |
| E1-V | 5,95 | - | 5,95 | - |
| F1 | 0,54 | 0,54 | 0,53 | 0,53 |
| F2 | 0,11 | 0,11 | 0,11 | 0,11 |
| F3 | 0,03 | 0,03 | 0,03 | 0,03 |
| F6 | 0,38 | 0,38 | 0,37 | 0,37 |
| F8 | 0,16 | 0,16 | 0,59 | 0,59 |
| F9 | 0,05 | 0,05 | 0,05 | 0,05 |
| L1 | 3,46 | 3,46 | 3,46 | 3,46 |
| L2 | 7,51 | 7,51 | 7,47 | 7,47 |
| L4 | 8,31 | 8,31 | 8,27 | 8,27 |
| L5 | 1,15 | 1,15 | 1,15 | 1,15 |
| Summe | 100,00 | 100,00 | 100,00 | 100,00 |

Die Haftvermittlungslacke HL1 bis HL4 sind allesamt erfindungsgemäß. HL1 und HL2 unterscheiden sich voneinander indem HL2 die erfindungsgemäß vorteilhafte Komponente (E) enthält, während HL1 einen polyesterbsierten Haftvermittler anstatt dessen verwendet. Gleiches gilt in Bezug auf die Lacke HL3 und HL4, wobei der Lack HL4 die erfindungsgemäß vorteilhaft einsetzbare Komponente (E) enthält. HL3 und HL4 enthalten im Vergleich zu HL1 und HL2 auch größere Mengen des haftungsverstärkenden Silans F8.

**Tabelle 4 - Füllerzusammensetzungen**

| Komponenten | F1 | F2 | F2-V |
|---|---|---|---|
| A1 | 12,67 | 18,24 | 18,24 |
| B1 | 9,33 | 2,52 | 2,52 |
| C4 | 33,33 | 37,11 | - |
| CX-V | - | - | 37,11 |
| D1 | 0,67 | 0,63 | 0,63 |
| D2 | 13,00 | 12,26 | 12,26 |
| D3 | 4,87 | 4,59 | 4,59 |
| D6 | 8,00 | 7,55 | 7,55 |
| D7 | 0,67 | 0,63 | 0,63 |
| E2 | 3,33 | 3,14 | 3,14 |
| F1 | 0,67 | 0,63 | 0,63 |
| F2 | 0,20 | 0,19 | 0,19 |
| F4 | 0,53 | 0,50 | 0,50 |
| F5 | 0,20 | 0,19 | 0,19 |
| F7 | 0,07 | 0,06 | 0,06 |
| F8 | 0,20 | 0,19 | 0,19 |
| F9 | 0,40 | 0,38 | 0,38 |
| F10 | 0,20 | 0,19 | 0,19 |
| L1 | 1,00 | 0,94 | 0,94 |
| L3 | 2,00 | 1,89 | 1,89 |
| L4 | 8,66 | 8,17 | 8,17 |
| Summe | 100,00 | 100,00 | 100,00 |

Die erfindungsgemäßen Füllerzusammensetzungen F1 und F2 unterscheiden sich deutlich im Verhältnis der Komponenten (A) und (B) zueinander und auch insbesondere auch bezüglich der absoluten Einsatzmenge an (B). Die erfindungsgemäße Füllerzusammensetzung F2 unterscheidet sich von der nicht erfindungsgemäßen Zusammensetzung F2-V dadurch, dass erstere ein biuretgruppenhaltiges Polyisocyanat enthält, während letztere ein isocyanuratgruppenhaltiges Polyisocyanat umfasst.

### Applikation der Beschichtungsmittel

### Substratvorbereitung

Als Substrate wurden gewählt: Aluminium (Reinaluminium 4 min bei Raumtemperatur mit 16 gew.-%iger Natronlauge und anschließend 2 min mit Salpetersäure gebeizt, dann mit Wasser gewaschen und gereinigt); Aluminiumlegierung 2024 (plattiert oder unplattiert und nach obengenanntem Verfahren gebeizt, gewaschen und gereinigt); Aluminiumlegierung 2024 (plattiert oder unplattiert; chromsäureanodisiert oder weinsäure-schwefelsäureanodisiert); Reintitan (angeschliffen mit 180er Körnung); Edelstahl (V2A und V4A geschliffen mit 180er Körnung und säuregebeizt); Epoxidharzplatten (glasfaserverstärkt und kohlenfaserverstärkt, angeschliffen mit 180er Körnung); Polyurethan- und Polyharnstoffsubstrate (gereinigt mit Isopropanol oder angeschliffen).

### Applikation als Grundierung

Die Substrate wurden mit den Zusammensetzungen der angegebenen Beispiele mittels einer Fließbecherpistole durch Spritzauftrag beschichtet (Trockenfilmschichtdicke auf Aluminium: ca. 20-25 µm, Trockenfilmschichtdicke auf Stahl: ca. 50 µm; Trockenfilmschichtdicke auf Nickel: ca. 50 µm) und nach Trocknung mit einem Decklack (Glasurit Reihe 68, High Solids 2K-CV-Decklack, RAL 9016; Trockenschichtdicke 70 µm) beschichtet.

### Applikation als Zwischenschicht

Als Grundierung wurde ein Polyurethanprimer (Glasurit CV Universal-Primerfüller; 60 µm Trockenschichtdicke) auf das Substrat spritzappliziert, dann wurden die Zusammensetzungen der Beispiele spritzappliziert und anschließend wurde ein Decklack (Glasurit Reihe 68, High Solids 2K-CV-Decklack, RAL 9016; Trockenschichtdicke 70 µm) aufgebracht.

### Applikation als Decklackschicht

Es wurde wie bei der Applikation als Zwischenschicht verfahren, jedoch auf das Aufbringen der dort beschriebenen Decklackschicht verzichtet, das heißt die erfindungsgemäßen Beschichtungsmittel selbst bilden die Decklackschicht.

### Applikation als Klarlack

Es wurde wie beim Aufbringen als Decklackschicht verfahren, nur dass anstelle eines erfindungsgemäßen pigmentierten Lacks ein erfindungsgemäßer Klarlack als Decklack eingesetzt wurde.

### Anwendungstechnische Prüfungen

### Abbeizbarkeit (mit einem für die Flugzeugindustrie geeigneten Abbeizer/Restripper)

Es werden zwei Proben sieben Tage bei Raumtemperatur getrocknet. Eine der Proben wird zusätzlich 96 h bei 70°C gealtert, dann werden die Proben jeweils mittels eines für die Aircraftindustrie geeigneten Abbeizer entlackt (Turco® 1270-5 Abbeizer auf Benzylalkohol-Basis; erhältlich von der Firma Henkel Technologies). Hierzu wird die jeweilige Probe mit dem Abbeizer benetzt. Anschließend erfolgt eine maximal siebenstündige Einwirkzeit. Anschließend kann mit einem handelsüblichen Tüchern, Schwämmen, Spateln, oder Ähnlichem das angequollene Material vom Untergrund entfernt werden. Je nach System, Lackaufbau und Schichtdicken variiert die Wirksamkeit, so dass auch eine deutlich frühere Entfernbarkeit als nach 7 Stunden möglich ist. Die Auswertung erfolgt nach dem +/- Prinzip, "+" = Material lässt sich nach spätestens sieben Stunden entfernen, "-" = Material lässt sich nach 7 Stunden nicht entfernen. "o" = Material lässt sich nur teilweise innerhalb des Einwirkzeitraumes von sieben Stunden entfernen.

### Ritzhärteprüfung nach Clemens vor und nach Belastung mit Skydrol

Nach 7-tägiger Trocknung der Beschichtungen bei Raumtemperatur wird die Ritzhärte mit Hilfe eines Ritzstichels, der automatisch über die Beschichtung fährt und hierbei konstant seine Belastung erhöht, ermittelt. Eine Dreifachbestimmung ist hierbei durchzuführen. Es wird ein Gerät der Firma Erichsen (Ritzhärteprüfgerät nach Sikkens, Modell 601) eingesetzt. Anschließend werden die Proben in Skydrol für 42 Tage bei Raumtemperatur gelagert. Im Anschluss wird wie oben beschrieben wieder eine Ritzhärteprüfung durchgeführt.

### Bestimmung des Haftzugswerts

Nach 7-tägiger Trocknung der Beschichtungen bei Raumtemperatur wird ein Prüfstempel auf die Beschichtung geklebt. Nach 24h Durchtrocknung oder 24h Durchtrocknung gefolgt von 4 tägiger Lagerung bei 70 °C und 100% Luftfeuchtigkeit, wird mittels einer Zugprüfmaschine senkrecht zum Untergrund gleichmäßig langsam bis zum Abriss (Bruch) gezogen. Dabei ist neben dem Messwert der in N/mm² angegeben wird, ebenfalls die Beschreibung des Bruchortes maßgebend. Adhäsionsbruch (zwischen zwei Schichten) oder Kohäsionsbruch (innerhalb einer Schicht).

### UV-Bewitterung

Vor UV-Bewitterung werden die oben genannten Parameter (siehe Beschreibung) gemessen. Es wird ein Gerät der Firma QUV-Lab (Model: QUV/SE) eingesetzt. Hierbei wird die Wirkung von Sonnenlicht, sowie Tau und Regen simuliert. Die Bestrahlung mit UV-Licht erfolgt bei 60°C und die Bewitterung mit kondensiertem Wasser bei 40°C. Hierbei dauert jeweils ein Zyklus 4 Stunden. Je nach Anforderung verbleiben die Proben 1000h, 2000h oder 3000h im Testgerät. Anschließend werden die oben genannten Messungen wiederholt.

### Farbtonmessung

Der Farbton wird mit einem Farbtonmessgerät der Firma Largo mit dem Programm Largo Match 2000 gemessen.

### Testergebnisse

**Tabelle 5 - Testergebnisse für die Klarlacke aus Tabelle 1**

| Tests | KL1 | KL1-V | KL2 | KL2-V | KL-3 | KL-4 |
|---|---|---|---|---|---|---|
| Abbeizbarkeit | | | | | | |
| | + | o | + | o | + | + |
| Ritzhärte (in kg) nach Clemens auf Aluminiumsubstrat vor/nach Skydrolbelastung | | | | | | |
| Schichtdicke in µm | 49,8 | 57,6 | 45,9 | 47,4 | 39,9 | 38,4 |
| vor Belastung | 4,5 | 3,5 | 3,2 | 1,9 | 4,8 | 4,6 |
| nach Belastung (35 d) | 2,7 | 2,3 | 1,9 | - | 2,2 | 2,1 |

Tabelle 5 zeigt, dass die erfindungsgemäßen Klarlacke vollständig abbeizbar sind, während bei den nicht-erfindungsgemäßen Klarlacken, welche ein ungeeignets Polyisocyanat enthalten keine vollständige Abbeizbarkeit gegeben ist. Darüber hinaus ist bei den direkten Vergleichen KL1 zu KL1-V und KL2 zu KL2-V deutlich erkennbar, dass selbst bei niedrigerer Schichtdicke die erfindungsgemäßen Lacke KL1 und KL2 höhere Ritzhärten vor und nach Skydrolbelastung besitzen.

**Tabelle 6 - Testergebnisse für die Basislacke aus Tabelle 2**

| Tests | BL1 | BL1-V | BL2 | BL2-V | BL3 | BL3-V | BL4 | BL4-V |
|---|---|---|---|---|---|---|---|---|
| Abbeizbarkeit | | | | | | | | |
| | + | o | + | o | + | o | + | o |
| Ritzhärte (in kg) nach Clemens auf Aluminiumsubstrat vor/nach Skydrolbelastung | | | | | | | | |
| Schichtdicke in µm | 30,2 | 33,7 | 30,7 | 27,9 | 30,1 | 28,4 | 36,0 | 38,8 |
| vor Belastung | 8,6 | 7,8 | >8,9 | 8,5 | 8,7 | 8,1 | >8,9 | 7,3 |
| nach Belastung | 4,6 | 2,3 | 5,0 | 2,5 | 4,3 | 1,6 | 4,3 | 2,0 |
| Farbton nach UV-Bewitterung | | | | | | | | |
| dL | -0,39 | -0,45 | -0,30 | -0,35 | -0,44 | -0,51 | -0,36 | -0,42 |
| da | -0,26 | -0,33 | -0,24 | -0,28 | -0,37 | -0,46 | -0,28 | -0,34 |
| db | 0,79 | 0,84 | 0,80 | 0,87 | 0,86 | 0,96 | 0,83 | 1,02 |
| dE | 0,84 | 0,96 | 0,83 | 0,85 | 0,92 | 1,01 | 0,94 | 1,07 |

Tabelle 6 zeigt, dass die Füllstoffe und Pigmente enthaltenden Basislacke ebenfalls nur dann eine gute Abbeizbarkeit besitzen, wenn ein biuretgruppenhaltiges Polyisocyanat eingesetzt wurde. Der Vergleich der Basislacke BL1 und BL2 zeigt, dass auch beim Einsatz unterschiedlicher Komponenten (A) hervorragende Ergebnisse erzielt werden. Darüber hinaus ist bei den direkten Vergleichen BL1 zu BL1-V, BL2 zu BL2-V, BL3 zu BL3-V und BL4 zu BL4-V deutlich erkennbar, dass die erfindungsgemäßen Lacke BL1, BL2, BL3 und BL4 höhere Ritzhärten vor und nach Skydrolbelastung besitzen. Auch sind die Farbtonabweichungen der erfindungsgemäßen Lacke nach UV-Bewitterung deutlich niedriger als bei den nicht-erfindungsgemäßen Basislacken.

**Tabelle 7 - Testergebnisse für die Lacke aus Tabelle 3**

| Test | Substrat | HL1 | HL2 | HL3 | HL4 |
|---|---|---|---|---|---|
| Abbeizbarkeit | | | | | |
| | | + | + | + | + |

| Haftzug in N/mm² | | | | | |
|---|---|---|---|---|---|
| nach 1 Tag RT | Nickel | 2,06 | 3,46 | 3,52 | 5,32 |
| | V2A-Stahl | 1,78 | 3,69 | 3,36 | 4,66 |
| | Aluminium, gebeizt | 4,38 | 5,21 | 5,89 | 7,36 |
| nach 1 Tag RT und 4 Tagen 70°C, 100% Luftfeuchte | Nickel | 2,89 | 5,16 | 3,59 | 12,78 |
| | V2A-Stahl | 2,80 | 4,89 | 3,73 | 10,93 |
| | Aluminium, gebeizt | 3,65 | 9,63 | 5,52 | 14,93 |

Alle in Tabelle 7 getesten Proben sind erfindungsgemäß und zeigen ein hervorragendes Abbeizverhalten. Bei allen Proben erfolgte bei der angegebenen Belastung ein 100%iger Adhäsionsriss zwischen Grundierung und Untergrund. Die Formulierungen HL2 und HL4 enthalten jedoch ein epoxyfunktionelles Acrylharz gemäß der erfindungsgemäß einsetzbaren Komponente (E) während die Formulierungen HL1 und HL3 ein polyesterbasiertes Haftharz enthalten. Die mit epoxyfunktionellen Acrylatharzen additivierten Lacke zeigen ein deutlich besseres Haftzugverhalten in den aus den erfindungsgemäßen Beschichtungsmitteln erhaltenen Beschichtungen. Die Haftzugfestigkeit kann zudem durch Zusatz größerer Mengen eines Silans weiter erhöht werden wie beim Vergleich HL1 mit HL3 und HL2 mit HL4 deutlich zu erkennen ist.

**Tabelle 8 - Testergebnisse für die Füller aus Tabelle 4**

| Test | F1 | F2 | F2-V |
|---|---|---|---|
| Abbeizbarkeit | + | + | o |

Die erfindungsgemäßen Füller zeigen ein deutlich besseres Abbeizverhalten als der nicht-erfindungsgemäße Füller F2-V.

## Patentansprüche

1. Beschichtungsmittelzusammensetzung, umfassend
(i) mindestens einen hydroxylgruppenhaltigen Polyester (A) mit einer OH-Zahl von 250 bis 660 mg KOH/g,
(ii) mindestens ein Polycarbonatdiol (B) mit einer OH-Zahl von 35 bis 500 mg KOH/g in einer Menge von 1 bis 20 Gew.-% bezogen auf das Gesamtgewicht der fertigen Beschichtungsmittelzusammensetzung, und
(iii) mindestens ein Biuretgruppen enthaltendes Polyisocyanat (C) mit einem Isocyanatgruppengehalt von 5,8 bis 27 Gew.-%,
wobei der hydroxylgruppenhaltige Polyester (A) vom Polycarbonatdiol (B) verschieden ist,
und wobei die Beschichtungsmittelzusammensetzung
(iv) einen Anteil an organischen Lösemitteln von weniger als 420 g/l besitzt, und
(v) bezogen auf den Festkörper 40 bis 100 Gew.-% an Bindemitteln enthält.

2. Beschichtungsmittelzusammensetzung nach Anspruch 1, wobei der hydroxylgruppenhaltige Polyester (A) aliphatisch und/oder verzweigt ist.

3. Beschichtungsmittelzusammensetzung nach einem der Ansprüche 1 oder 2, wobei das Polycarbonatdiol (B) aliphatisch und/oder linear ist.

4. Beschichtungsmittelzusammensetzung nach einem der Ansprüche 1 bis 3, wobei das Polycarbonatdiol (B) eine OH-Zahl von 100 bis 250 mg KOH/g besitzt.

5. Beschichtungsmittelzusammensetzung nach einer der Ansprüche 1 bis 4, wobei das Biuretgruppen enthaltende Polyisocyanat (C) aliphatisch ist.

6. Beschichtungsmittelzusammensetzung nach einem der Ansprüche 1 bis 5, wobei das Biuretgruppen enthaltende Polyisocyanat (C) auf Basis von Hexamethylendiisocyanat und/oder Isophorondiisocyanat aufgebaut ist.

7. Beschichtungsmittelzusammensetzung nach einem der Ansprüche 1 bis 6, wobei das Biuretgruppen enhaltende Polyisocyanat (C) einen Isocyanatgruppengehalt von 15 bis 26 Gew.-% besitzt.

8. Beschichtungsmittelzusammensetzung nach einem der Ansprüche 1 bis 7, wobei diese Pigmente und/oder Füllstoffe enthält.

9. Beschichtungsmittelzusammensetzung nach Anspruch 8, wobei die Pigmente gewählt sind aus der Gruppe bestehend aus farbgebenden Pigmenten, effektgebenden Pigmenten, farb- und effektgebenden Pigmenten und Korrosionsschutzpigmenten und die Füllstoffe gewählt sind aus der Gruppe bestehend aus Silikaten, Kieselsäuren und Calciumcarbonaten.

10. Beschichtungsmittelzusammensetzung nach einem der Ansprüche 1 bis 9, wobei diese eine Komponente (E) enthält, die mindestens ein Epoxidharz oder eine Mischung mindestens eines Epoxidharzes mit mindestens einem hydroxyfunktionellen Acrylatharz umfasst.

11. Beschichtungsmittelzusammensetzung nach einem der Ansprüche 1 bis 10, wobei diese ein vom hydroxylgruppenhaltigen Polyester (A), vom Polycarbonatdiol (B), dem Biuretgruppen enthaltenden Polyisocyanat (C), und soweit Komponenten (D) und (E) enthalten sind, ein von diesen verschiedenes Bindemittel enthält.

12. Beschichtungsmittelzusammensetzung nach einem der Ansprüche 1 bis 11, wobei das Verhältnis der Hydroxylgruppen der Komponenten (A), (B) und soweit vorhanden (E) zu den Isocyanatgruppen der Komponente (C) von 1 : 1,1 bis 1 : 1,5 beträgt.

13. Verfahren zur Herstellung einer Mehrschichtbeschichtung erhältlich durch Aufbringen mindestens einer Grundiermittelzusammensetzung auf ein metallisches Substrat und/oder Kunststoffsubstrat, Aufbringen mindestens einer Decklackzusammensetzung darauf und gegebenenfalls durch Aufbringen mindestens einer Klarlackzusammensetzung darauf, wobei mindestens eine der Grundiermittelzusammensetzungen, Decklackzusammensetzungen oder Klarlackzusammensetzungen eine Beschichtungsmittelzusammensetzung nach einem der Ansprüche 1 bis 12 ist und anschließender chemischer Vernetzung.

14. Verwendung einer Beschichtungsmittelzusammensetzung nach einem oder mehreren der Ansprüche 1 bis 12 als Grundiermittelzusammensetzung, Decklackzusammensetzung oder Klarlackzusammensetzung zur Beschichtung von metallischen Substraten und/oder Kunststoffsubstraten.

15. Verwendung nach Anspruch 14, wobei es sich beim Substrat um eine Flugzeughülle oder ein Teil einer Flugzeughülle, um eine Windenergieanlage Rotorblätter, um eine Schiffshülle oder ein Teil derselben oder eine Maschine handelt.

16. Substrat bestehend aus einem oder mehreren Metallen und/oder Kunststoffen, welches mit einer chemisch vernetzten Beschichtungsmittelzusammensetzung gemäß einem der Ansprüche 1 bis 12 beschichtet ist oder durch das Verfahren nach Anspruch 13 erhalten wurde.

## Claims

1. Coating material composition comprising
(i) at least one hydroxyl-containing polyester (A) having an OH number of 250 to 660 mg KOH/g,
(ii) at least one polycarbonate diol (B) having an OH number of 35 to 500 mg KOH/g, in an amount of 1 to 20 wt%, based on the total weight of the completed coating material composition, and
(iii) at least one polyiscyanate (C) containing biuret groups and having an isocyanate group content of 5.8 to 27 wt%,
the hydroxyl-containing polyester (A) being different from the polycarbonate diol (B),
and Coating material composition
(iv) possessing a fraction of organic solvents of less than 420 g/l, and
(v) comprising, based on the solids content, 40 to 100 wt% of binders.

2. Coating material composition according to Claim 1, the hydroxyl-containing polyester (A) being aliphatic and/or branched.

3. Coating material composition according to either of Claims 1 and 2,
the polycarbonate diol (B) being aliphatic and/or linear.

4. Coating material composition according to any of Claims 1 to 3,
the polycarbonate diol (B) possessing an OH number of 100 to 250 mg KOH/g.

5. Coating material composition according to any of Claims 1 to 4,
the polyisocyanate (C) containing biuret groups being aliphatic.

6. Coating material composition according to any of Claims 1 to 5,
the polyisocyanate (C) containing biuret groups being constructed on the basis of hexamethylene diisocyanate and/or isophorone diisocyanate.

7. Coating material composition according to any of Claims 1 to 6,
the polyisocyanate (C) containing biuret groups possessing an isocyanate group content of 15 to 26 wt%.

8. Coating material composition according to any of Claims 1 to 7,
comprising pigments and/or fillers.

9. Coating material composition according to Claim 8, the
pigments being selected from the group consisting of colour-imparting pigments, effect-imparting pigments, colour- and effect-imparting pigments, and anticorrosion pigments, and the fillers being selected from the group consisting of silicates, silicas, and calcium carbonates.

10. Coating material composition according to any of Claims 1 to 9,
comprising a component (E) which comprises at least one epoxy resin or a mixture of at least one epoxy resin with at least one hydroxy-functional acrylate resin.

11. Coating material composition according to any of Claims 1 to 10,
comprising a binder other than the hydroxyl-containing polyester (A), than the polycarbonate diol (B), than the polyisocyanate (C) containing biuret groups, and than components (D) and (E) where the latter are present.

12. Coating material composition according to any of Claims 1 to 11,
the ratio of the hydroxyl groups of components (A), (B), and, where present, (E) to the isocyanate groups of component (C) being from 1:1.1 to 1:1.5.

13. Method for producing a multicoat coating obtainable by
applying at least one primer composition to a metallic substrate and/or plastic substrate, applying at least one topcoat composition thereto, and optionally by applying at least one clearcoat composition thereto, at least one of the primer compositions, topcoat compositions, or clearcoat compositions being a coating material composition according to any of Claims 1 to 12, and by subsequent chemical crosslinking.

14. Use of a coating material composition according to one or more of Claims 1 to 12 as a primer composition, topcoat composition, or clearcoat composition for Coating of metallic substrates and/or plastic substrates.

15. Use according to Claim 14, the substrate being an airplane body or part of an airplane body, rotor blades of a wind energy system, a ship's hull or a part thereof, or a machine.

16. Substrate consisting of one or more metals and/or plastics
that has been coated with a chemically crosslinked coating material composition according to any of Claims 1 to 12 or has been obtained by the method according to Claim 13.

## Revendications

1. Composition d'agent de revêtement, comprenant :
(i) au moins un polyester contenant des groupes hydroxyle (A) ayant un indice OH de 250 à 660 mg KOH/g,
(ii) au moins un polycarbonate-diol (B) ayant un indice OH de 35 à 500 mg KOH/g en une quantité de 1 à 20 % en poids par rapport au poids total de la composition d'agent de revêtement finie,
et
(iii) au moins un polyisocyanate contenant des groupes biuret (C) ayant une teneur en groupes isocyanate de 5,8 à 27 % en poids,
le polyester contenant des groupes hydroxyle (A) étant différent du polycarbonate-diol (B),
et la composition d'agent de revêtement
(iv) présentant une proportion de solvants organiques de moins de 420 g/l et
(v) contenant 40 à 100 % en poids de liants par rapport aux corps solides.

2. Composition d'agent de revêtement selon la revendication 1, dans laquelle le polyester contenant des groupes hydroxyle (A) est aliphatique et/ou ramifié.

3. Composition d'agent de revêtement selon l'une quelconque des revendications 1 ou 2, dans laquelle le polycarbonate-diol (B) est aliphatique et/ou linéaire.

4. Composition d'agent de revêtement selon l'une quelconque des revendications 1 à 3, dans laquelle le polycarbonate-diol (B) présente un indice OH de 100 à 250 mg KOH/g.

5. Composition d'agent de revêtement selon l'une quelconque des revendications 1 à 4, dans laquelle le polyisocyanate contenant des groupes biuret (C) est aliphatique.

6. Composition d'agent de revêtement selon l'une quelconque des revendications 1 à 5, dans laquelle le polyisocyanate contenant des groupes biuret (C) est formé à base de diisocyanate d'hexaméthylène et/ou de diisocyanate d'isophorone.

7. Composition d'agent de revêtement selon l'une quelconque des revendications 1 à 6, dans laquelle le polyisocyanate contenant des groupes biuret (C) présente une teneur en groupes isocyanate de 15 à 26 % en poids.

8. Composition d'agent de revêtement selon l'une quelconque des revendications 1 à 7, dans laquelle celle-ci contient des pigments et/ou des charges.

9. Composition d'agent de revêtement selon la revendication 8, dans laquelle les pigments sont choisis dans le groupe constitué par les pigments colorants, les pigments à effet, les pigments colorants et à effet et les pigments anticorrosion, et les charges sont choisies dans le groupe constitué par les silicates, les silices et les carbonates de calcium.

10. Composition d'agent de revêtement selon l'une quelconque des revendications 1 à 9, dans laquelle celle-ci contient un composant (E), qui comprend au moins une résine époxyde ou un mélange d'au moins une résine époxyde avec au moins une résine acrylate à fonction hydroxy.

11. Composition d'agent de revêtement selon l'une quelconque des revendications 1 à 10, dans laquelle celle-ci contient un liant différent du polyester contenant des groupes hydroxyle (A), du polycarbonate-diol (B), du polyisocyanate contenant des groupes biuret (C) et, si les composants (D) et (E) sont contenus, différent de ceux-ci.

12. Composition d'agent de revêtement selon l'une quelconque des revendications 1 à 11, dans laquelle le rapport entre les groupes hydroxyle des composants (A), (B) et, s'il est présent, (E) et les groupes isocyanate du composant (C) est de 1:1,1 à 1:1,5.

13. Procédé de fabrication d'un revêtement multicouche pouvant être obtenu par application d'au moins une composition d'apprêt sur un substrat métallique et/ou un substrat en plastique, application d'au moins une composition de vernis de recouvrement sur celle-ci et éventuellement par application d'au moins une composition de vernis transparent sur celle-ci, au moins une des compositions d'apprêt, des compositions de vernis de recouvrement ou des compositions de vernis transparent étant une composition d'agent de revêtement selon l'une quelconque des revendications 1 à 12, puis réticulation chimique.

14. Utilisation d'une composition d'agent de revêtement selon une ou plusieurs des revendications 1 à 12 en tant que composition d'apprêt, composition de vernis de recouvrement ou composition de vernis transparent pour le revêtement de substrats métalliques et/ou de substrats en plastique.

15. Utilisation selon la revendication 14, dans laquelle le substrat est un fuselage d'aéronef ou une partie d'un fuselage d'aéronef, une installation éolienne, une pale de rotor, une coque de navire ou une partie de celle-ci ou une machine.

16. Substrat constitué par un ou plusieurs métaux et/ou plastiques, qui est revêtu avec une composition d'agent de revêtement réticulée chimiquement selon l'une quelconque des revendications 1 à 12 ou qui a été obtenu par le procédé selon la revendication 13.
